# EUROPÄISCHE PATENTANMELDUNG

(11) **EP 0 955 526 A1**
(43) Veröffentlichungstag der Anmeldung: **10.11.1999**
(21) Anmeldenummer: 99106412.2
(22) Anmeldetag: 27.03.1999
(51) Int. Cl.: G01F 15/18

(54) **Wasserzähler-Anschluss und Wasserzähler-Einheit**

(30) Priorität: 11.04.1998 DE 19816322
(71) Anmelder: Armaturenfabrik Wallisellen AG, CH-8304 Wallisellen (CH)
(72) Erfinder: Egli, Werner Dipl. Ing. ETH, 8194 Hüntwangen/ZH (CH)
(74) Vertreter: Wolff, Michael, Dipl.-Phys.

(57) **Zusammenfassung**

Um bei einem Wasserzähler-Anschluß eines Wasserzählers (11 oder 12), dessen Gehäuse koaxiale Wasserein- und -ausgänge aufweist, an ein Wasserleitungsgehäuse (1) mit komplementären Wasserein- und -ausgängen sowie einem koaxialen ringförmigen Aufnahmeteil (18) eine Anpassung an verschieden große Zählergehäuse zu erreichen, wird vorgeschlagen, in dem Aufnahmeteil (18) einen koaxialen ringförmigen Adapter (21) wasserdicht anzuordnen, in welchem das entfernbare Zählergehäuse wasserdicht gelagert ist, dessen Außenprofil dem Innenprofil des Adapters angepaßt ist.
Um bei einer Wasserzähler-Einheit aus zwei solchen Anschlüssen und aus zwei Wasserabsperrventilen (9 und 10), welche an den beiden verbundenen Wasserleitungsgehäusen (1) neben dem einen bzw. anderen Wasserzähler ( 11 oder 12) angeordnet sind, wobei jedes Ventil und jeder Zähler mit einem abgelängten Schutzrohr versehen ist, eine Abdeckrosette einzusparen und die verbliebene genau ausrichten zu können, wird vorgeschlagen, an den beiden Schutzrohren eine gemeinsame Abdeckrosette (17) zu lagern.

## Beschreibung

Gegenstand der Erfindung sind ein Wasserzähler-Anschluß und eine Wasserzähler-Einheit gemäß Anspruch 1 bzw. 4.
Aus der DE-OS 43 22 696 ist ein Montage-Baustein bekannt geworden, bei dem je ein Absperr-Ventil und ein Wasserzähler durch ein Rohrstück verbunden und durch vier Rohrschellen an der Rückwand eines Blechkastens befestigt sind. Nachteilig an diesem Baustein ist, daß für jede Abmessung eines Wasserzählers ein anderes Wasserzähler-Gehäuse notwendig ist und somit gleichviele komplett montierte Blechkästen notwendig sind wie es Wasserzähler gibt.
Aus dem DE-GM 2 96 12 197 ist ein weiterer Montage-Baustein bekannt geworden, bei dem anstelle des Blechkastens ein geschäumter Block von einer minimalen Festigkeit vorhanden ist, in dem die Armaturen fixiert sind. Auch hier ist nachteilig, daß für jeden Typ Wasserzähler ein anderer Block notwendig ist, was die Lagerhaltung sehr erschwert. Ferner ist der Zusammenbau des ganzen Bausteins sehr arbeitsintensiv, da vor der Umschäumung acht Verschraubungen dicht montiert und abgepreßt werden müssen. Ferner ist der Platzbedarf für den Baustein erheblich und somit die Platzwahl sehr eingeschränkt. Auch ist es notwendig, bei diesen Abmessungen eine Libelle einzubauen, da selbst kleine Abweichungen von der Horizontalen vom Auge als störend empfunden werden.

Die vorliegende Erfindung schafft einem Wasserzähler-Einheit/-Anschluß, bei der/dem die Vormontagezeit wesentlich verkürzt ist, die Montage auf dem Bau einfacher ist, der Platzbedarf wesentlich geringer ist und vor allem die Lagerhaltung entscheidend verringert ist, indem für die meisten der bekannten Wasserzähler ein und dasselbe Gehäuse verwendet werden kann. Ein weiterer Vorteil liegt darin, daß infolge der Kompaktheit der Wasserzahler-Einheit eine einzige Abdeckrosette verwendet werden kann, die nur auf einem Schutzrohr drehbar geführt ist und deshalb auch bei einer etwas von der Horizontalen abweichenden Lage der Wasserzähler-Einheit in eine für das Auge horizontale Lage gedreht werden kann.

Ein bevorzugtes Ausführungsbeispiel der erfindungsgemäßen Wasserzähler-Einheit wird nachfolgend anhand von Zeichnungen näher erläutert. Es zeigt:
- Fig. 1: eine Draufsicht der kompletten Wasserzähler-Einheit ohne Abdeckrosette
- Fig. 2: einen Schnitt entlang der Linie A-A in Fig. 1
- Fig. 3: eine Draufsicht der Außenseite einer Abdeckrosette

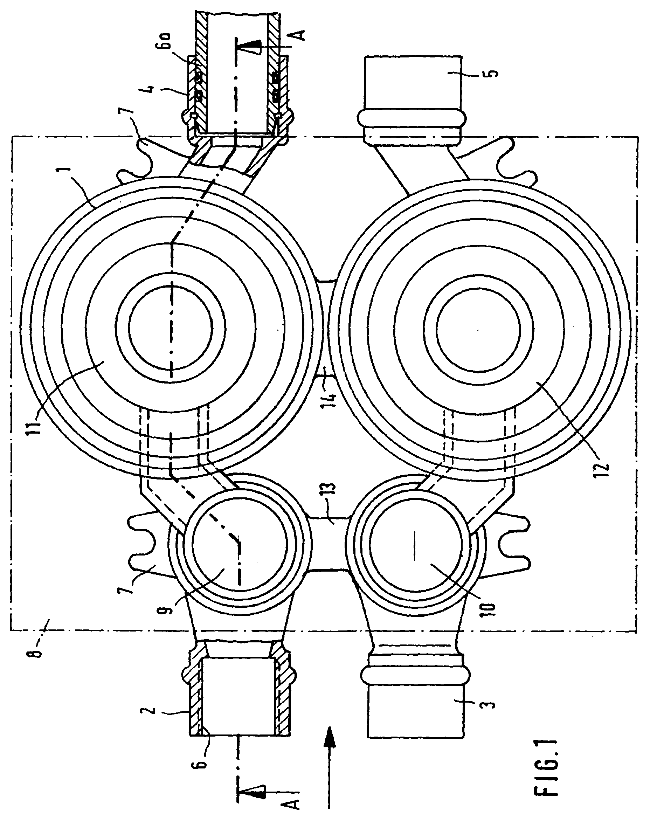

In Fig. 1 ist das einstöckige Gehäuse mit 1, sind die Eingangsstutzen für Kalt- und Warmwasser mit 2 und 3 sowie die Ausgangsstutzen für Kalt- und Warmwasser mit 4 und 5 bezeichnet. Die vier Stutzen 2 bis 5 können als übliche Schraubanschlüsse 6 oder als Steckverbindungen 6a ausgebildet sein. Die Befestigung der ganzen Wasserzähler-Einheit auf einer Rückwand oder auf einem Installationsrahmen kann durch vier Schrauben mit Distanzhülsen und schalldämmenden Manschetten aus elastischem Material (nicht gezeichnet) mit Hilfe von vier am Gehäuse 1 angeformten Befestigungslappen 7 erfolgen. Es ist zusätzlich möglich, die ganze Wasserzähler-Einheit mit einem angedeuteten Block 8 zu umschäumen. In diesem Fall wäre der Platz für die vier Befestigungs-Schrauben und die Befestigungslappen 7 in dem Umschäumungs-Block 8 ausgespart.
Es ist aber auch möglich, die ganze Einheit anderweitig, zum Beispiel mittels Rohrschellen (nicht gezeichnet), zu befestigen.
Die beiden Absperrventile für Kalt- und Warmwasser sind mit 9 und 10 sowie die beiden Wasserzähler für Kalt- und Warmwasser mit 11 und 12 bezeichnet. Zwischen den beiden Absperrventilen 9 und 10 sowie zwischen den beiden Wasserzählern 11 und 12 ist je eine Verbindungsrippe 13 beziehungsweise 14 angeformt. Durch diese Rippen wird das Gehäuse 1 einstückig.

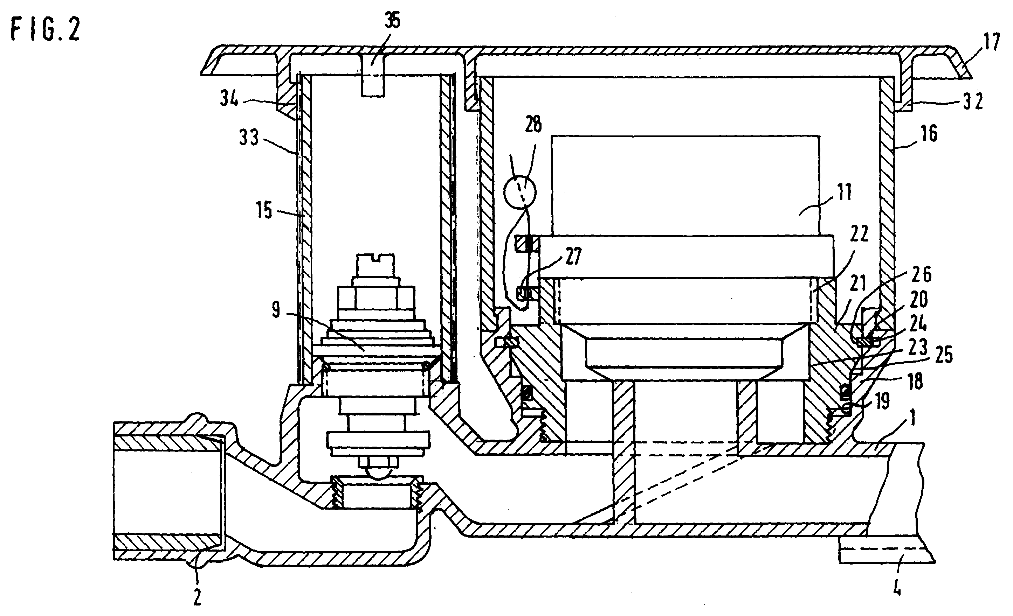

In der Fig. 2 sind das handelsübliche Absperrventil 9 und der handelsübliche Wasserzähler 11 in Seitenansicht zu sehen. Sowohl ein Schutzrohr 15 für das Absperrventil 9 als auch ein Schutzrohr 16 für den Wasserzähler 11 können je nach Wandstärke der Mauer auf die richtige Länge gekürzt werden. Für die ganze Einheit ist eine einzige Abdeckrosette 17 vorgesehen.
Am Gehäuse 1 axial nach vorn angeformt ist ein im wesentlichen konisches Teil 18 mit ausgearbeiteter gestufter Innenfläche 19. Am oberen Ende des Gehäuseteiles 18, welcher mit einer Schnappverbindung 20 für das Schutzrohr 16 versehen ist, ist zwischen dem Teil 18 und dem Wasserzähler 11 ein Adapter 21 angeordnet. Dieser Adapter 21 weist eine Außenfläche auf, die mit der gestuften Innenfläche 19 des Teils 18 korrespondiert. Die Innenfläche des Adapters 21 hingegen korrespondiert mit der Außenfläche des adaptierten Wasserzählers 11. In jedem Fall ist ein Innengewinde 22 des Adapters 21 verschraubt mit einem Außengewinde des Wasserzählers 11 und der Innendurchmesser 23 des Adapters 21 derart bemessen, daß die hydraulischen Voraussetzungen für einwandfreies Funktionieren des Wasserzählers 11 erfüllt sind. Auch die Länge des Adapters 21 ist an den eingeschraubten Wasserzähler 11 angepaßt. - Der Innendurchmesser des Gehäuseteils 18 ist so gewählt, daß alle zur Zeit im Handel befindlichen Wasserzähler gleicher Bauart (Wassereingang axial ringförmig, Wasserausgang axial im Zentrum) in ein und dasselbe Gehäuse 1 aufgenommen werden können.

Die Montage des Wasserzählers geschieht in nachstehender Reihenfolge:
Zuerst wird der Adapter 21 auf den Wasserzähler 11 bzw. 12 aufgeschraubt. Anschließend wird der Wasserzähler zusammen mit dem Adapter in den Gehäuseteil 18 eingeschraubt.
Ein Sprengring 24 ist ein Bestandteil des Gehäuseteiles 18 und wurde bereits im Werk vormontiert. Beim Einschrauben des Adapters 21 wird durch einen Konus 25 der Sprengring 24 etwas aufgeweitet, und in der Adapter-Endstellung rastet der Sprengring 24 in eine Nut 26 des Adapters 21 ein.
Beim gesetzmäßig vorgesehenen Wechseln des Wasserzählers 11 oder 12 in einem bestimmten Turnus oder im Servicefall bleibt der Adapter 21 im Gehäuseteil 18, weil die Schraubverbindung beider nicht gelöst werden kann.
Da Wasserzähler in der Regel gegen unbefugtes Entfernen plombiert werden müssen, ist am Adapter 21 ein Lappen 27 vorgesehen, durch den eine Plombe 28 gelegt werden kann.

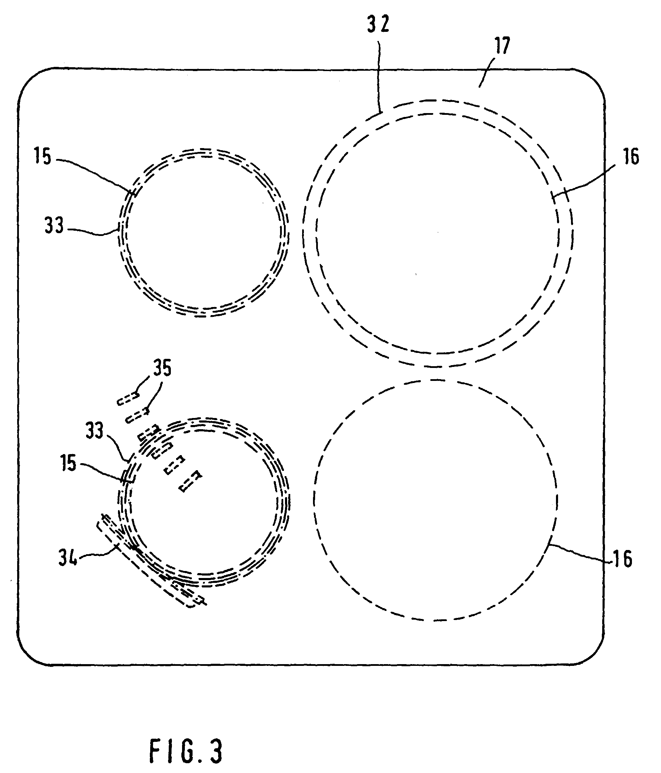

Die Abdeckrosette 17 ist nur auf dem Schutzrohr 16 mit Hilfe eines federnden Halses 32 axial geführt. Das Schutzrohr 15 ist mit einer feinen Außenverzahnung 33 versehen. An der Abdeckrosette 17 ist ein bogenförmiges Segment 34 angeformt, das beim entfernteren der beiden Schutzrohre 15 in die Außenverzahnung 33 selbsthemmend eingreift. Damit wird erreicht, daß die rechteckige Abdeckrosette 17 jederzeit in die horizontale Lage gedreht werden kann und darin verharrt.
Eine andere Ausrichtmöglichkeit zeigt Fig. 3: Hier sind anstelle des Segmentes 34 einzelne Lappen 35 an der Abdeckrosette 17 angeformt. Die Außenverzahnung 33 ist dabei nicht notwendig. Die Abdeckrosette 17 wird derart auf das Schutzrohr 16 aufgesteckt, daß die Wandung des vorderen freien Endes des Schutzrohres 15 zwischen zwei Lappen 35 zu liegen kommt. Damit ist ebenfalls eine Fixierung der Abdeckrosette 17 in der horizontalen Lage möglich.

## Patentansprüche

1. Wasserzähler-Anschluß eines Wasserzählers (11 oder 12), dessen Gehäuse koaxiale Wasserein- und -ausgänge aufweist, an ein Wasserleitungsgehäuse (1) mit komplementären koaxialen Wasserein- und -ausgängen sowie einem koaxialen ringförmigen Aufnahmeteil (18), in dem ein koaxialer ringförmiger Adapter (21) wasserdicht angeordnet ist, in welchem das entfernbare Zählergehäuse wasserdicht gelagert ist, wobei das Innenprofil des Adapters dem Außenprofil des Zählergehäuses angepaßt ist.

2. Anschluß nach Anspruch 1, dadurch gekennzeichnet, daß der Adapter (21) in den Aufnahmeteil (18) des Leitungsgehäuses (1) eingeschraubt und mittels eines Sprengringes (24) unlösbar mit dem Aufnahmeteil verbunden ist.

3. Anschluß nach Anspruch 2, dadurch gekennzeichnet, daß das Außenprofil des Adapters (21) einen, den in den Aufnahmeteil (18) eingelassenen Sprengring (24) beim Einschrauben des Adapters vorübergehend radial erweiternden, Konus (25) und eine axial folgende Rückstufe (Flanke der Nut 26) aufweist, hinter welcher der sperrende Sprengring radial eingreift.

4. Wasserzähler-Einheit aus zwei Anschlüssen nach einem der Ansprüche 1 bis 3 und aus zwei Wasserabsperrventilen (9 und 10), welche an den beiden verbundenen Wasserleitungs gehäusen (1) neben dem einen beziehungsweise anderen Wasserzähler (11 oder 12) angeordnet sind, wobei jedes Ventil und jeder Zähler mit einem abgelängten Schutzrohr (15 bzw. 16) versehen ist, an denen eine gemeinsame Abdeckrosette (17) gelagert ist.

5. Einheit nach Anspruch 4, dadurch gekennzeichnet, daß sie zur Blockbildung umschäumt ist, wobei das Innere der Schutzrohre (15 und 16) schaumfrei ist.

6. Einheit nach Anspruch 4 oder 5, dadurch gekennzeichnet, daß die Abdeckrosette (17) um die Achse eines Schutzrohres (16) drehbar an diesem gelagert ist und an ihrer Innenseite mit einem koaxialen Kreisringabschnitt (Segment 34, Lappen 35) versehen ist, der formschlüssig an dem diametralen Schutzrohr (15) angreift.

7. Einheit nach Anspruch 6, gekennzeichnet durch eine bogenförmige Zahnstange (34) als Kreisringabschnitt, die in eine Außenverzahnung (33) des diametralen Schutzrohres (15) eingreift.

8. Einheit nach Anspruch 6, gekennzeichnet durch eine, längs eines Bogens angeordnete, Reihe von Lappen (35) als Kreisringabschnitt, von denen ein Paar einander benachbarter Lappen das freie Ende des diametralen Schutzrohres (15) zwischen sich aufnimmt.
